# EUROPEAN PATENT APPLICATION

(11) **EP 1 302 368 A2**
(43) Date of publication of application: **16.04.2003**
(21) Application number: 02257083.2
(22) Date of filing: 11.10.2002
(51) Int. Cl.: B60R 11/02

(54) **Mounting and containment system for portable computers**

(30) Priority: 12.10.2001 GB 0124539; 22.08.2002 GB 0219633
(71) Applicant: Tempus Computers Limited, Birmingham, B3 1RB (GB)
(72) Inventor: Mann, Terence John, Sutton Coldfield, B74 4ER (GB); Warby, Andrew John, Redditch, Worcestershire, B97 5YF (GB); Holmes, William John, Redditch, Worcestershire, B97 4RX (GB)
(74) Representative: Barnfather, Karl Jon, Dr.

(57) **Abstract**

A mounting system for a portable computer suitable for use in a vehicle comprising a support member and an adjustable arm, wherein the adjustable arm is attached to the body of the vehicle and also to the support member.

## Description

The present invention relates to means of adjustably supporting and stowing portable computers and the like, particularly in vehicles.

Laptop computer supports, for attachment to domestic and commercial furniture, are known. However, portable computers such as laptop and notebook PCs are widely used by people as they travel in land, sea, and airborne vehicles.

Use of portable computers in vehicles raises special problems; for example, it is highly desirable to securely fix such equipment during travel, especially in boats. Rigid fixing of such portable computers is very important in the event of a crash; for example, in such circumstances unsecured items of this type can cause severe personal injury to occupants of road vehicle as they decelerate following impact. Such fixing often means that the computer is not ideally positioned from an ergonomic standpoint. In addition, loss of or damage to a portable computer may have other safety implications; for example, when it is being used as part of a navigation system.

In ground vehicles trays that can be attached to a steering wheel are known. However, the latter are generally only usable by the driver of the vehicle, provide little or no position adjustment facilities, and offer little or no security against theft.

One object of the present invention is to provide an improved mounting and/or containment system for portable computers and the like, particularly when used within vehicles. Another object is to provide a system that automatically presents a mounted portable computer to a user in an ergomomic way, thereby minimising the likelihood of personal injury to the user through having to stretch or bend etc., in order to position or use such equipment. Another object is to provide a system that either readily allows or provides automatic adjustment of the position of portable computer relative to the user within a vehicle. A further object is to provide a system that allows a portable computer to be securely stowed within a vehicle, preferably in an unobtrusive manner. This greatly reduces the likelihood of theft. Another object is to provide a system that allows a portable computer to be readily repositioned for use by either of two users. Yet another object is to provide a system that allows a portable computer to be supported on a mount that can be readily adjusted to suit various users and can be moved from an open position to a closed position, in which the mount and computer are securely stowed in an enclosure.

According to a first aspect of the invention there is provided a mounting system for a portable computer comprising a support member, adapted to hold a portable computer, and an adjustable arm attached to the support member, wherein the arm is connectable to the body of a vehicle.

According to a second aspect of the invention there is provided a mounting system for a portable computer comprising a support member, adapted to hold a portable computer, and an extendable arm attached to the support member, wherein the arm is connectable to the body of a vehicle such that when the arm is extended to allow access to the computer it prevents or hinders a driver using the vehicle.

According to a third aspect of the invention there is provided a mounting system for a portable computer comprising a support member, adapted to hold a portable computer, and means for extending and retracting the support member from and to a lockable housing connectable to the body of a vehicle.

According to a fourth aspect of the invention there is provided a mounting system for a portable computer comprising a support member, that allows a portable computer to be readily repositioned for use by either of two users.

According to a fifth aspect of the invention there is provided a mounting system for a portable computer comprising a support member that may be automatically tilted to a users preference as it is moved from a closed position to an open position.

According to a sixth aspect of the invention there is provided a vehicle with a mounting system for a portable computer comprising a mounting member and an adjustable arm, wherein the adjustable arm is attached to the body of the vehicle and also to the support member.

According to a seventh aspect of the invention there is provided a mounting system for a portable computer comprising a support member, adapted to hold a portable computer, an adjustable arm attached to the support member, and a housing for the arm and/or support member wherein during movement of the support member away from the housing one end of the arm moves vertically in an opposite direction to the support member.

Preferred embodiments of the invention will now be described by reference to the following diagrammatic drawings in which :
Figure 1 is a front elevation of a first embodiment of the system in a closed position,
Figure 2 is a plan elevation corresponding to Figure 1,
Figure 3 is an underside elevation corresponding to Figure 1,
Figure 4 is an enlarged version of Figure 3,
Figure 5 is an isometric view of the system of Figure 1 in a closed position,
Figure 6 is a side elevation of the system of Figure 1 in an open position,
Figure 7 is a perspective view corresponding to Figure 6,
Figure 8 is a side elevation of part of the embodiment shown in Figure 6,
Figure 9 is a plan view of the arm and mounting means in its tilted position,
Figure 10 shows the biasing arm in three positions,
Figure 11 is an isometric view of the support member pivoting mechanism,
Figure 12 is a perspective view the embodiment of Figures 1 to 11 fitted between front seats of a land vehicle,
Figure 13 is a perspective view of a second embodiment of the system in an open position,
Figure 14 is a side elevation of the tray and arm assembly of Figure 13,
Figure 15 is a plan elevation corresponding to Figure 14,
Figure 16 is a front perspective view of a support member having a slidingly mounted docking port,
Figure 17 is a partial rear perspective view of the support member and docking port of Figure 16,
Figure 18 shows how the mounting system in a partially open position,
Figure 19 shows schematically a hand operated lever mechanism for opening and closing the enclosure,
Figure 20 shows schematically further means for aiding a user to open and close the mounting system, and
Figure 21 shoes schematically the travel of the arm and tray during opening/closing relative to the roof and floor of a vehicle.

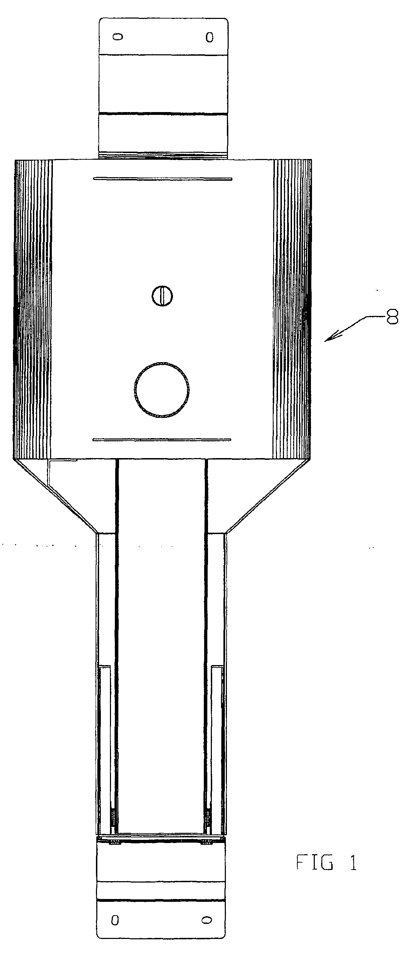

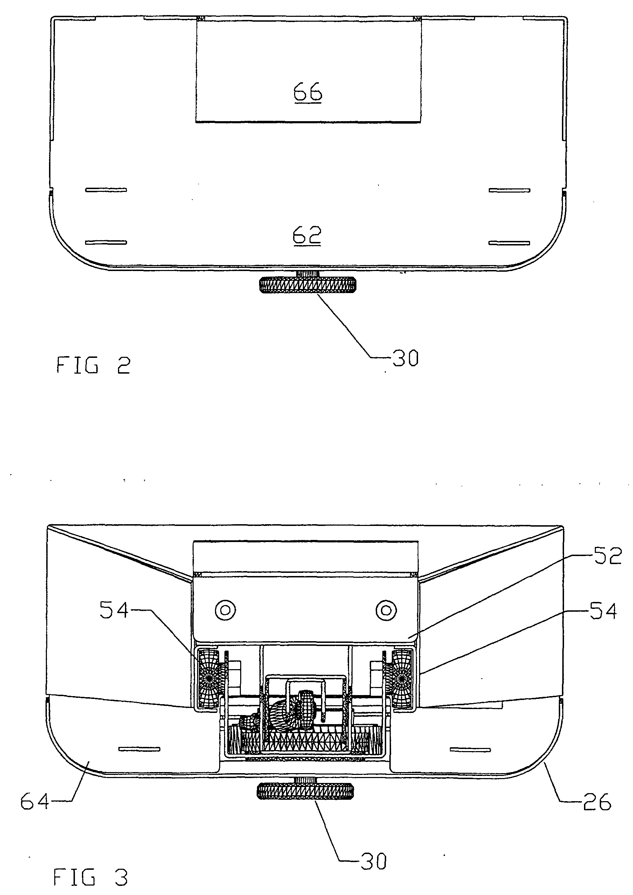

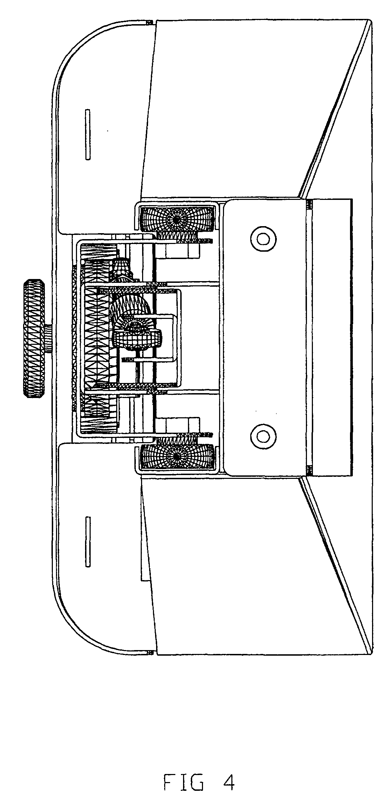

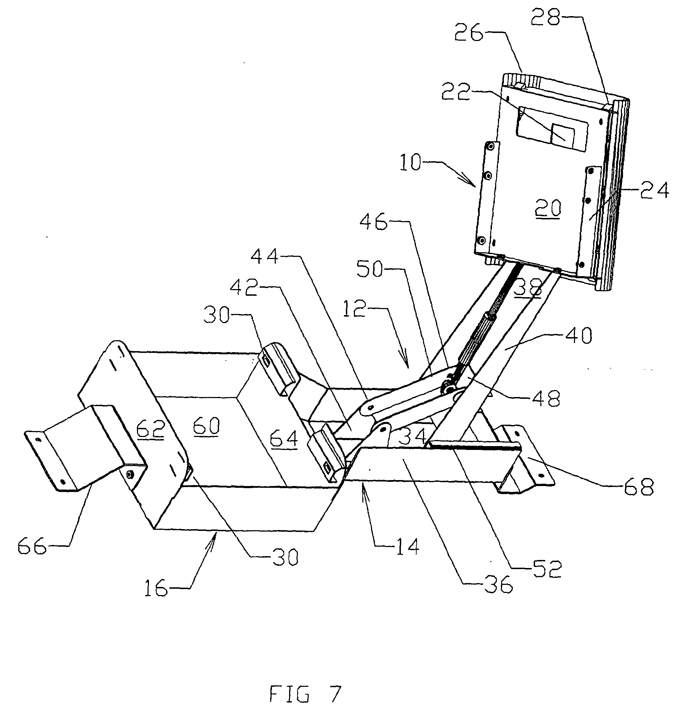

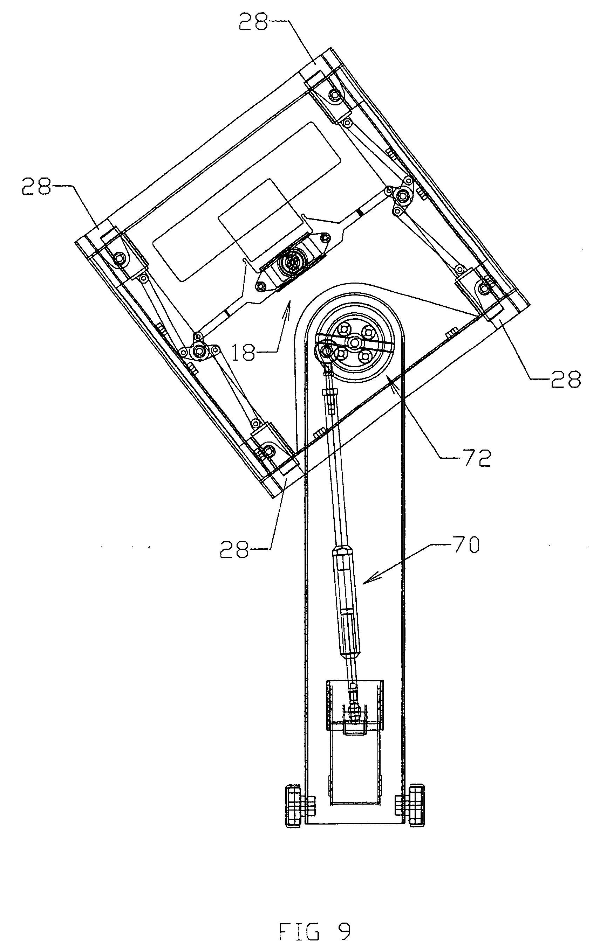

A first embodiment of the invention 8 illustrated in Figures 1 to 12 comprises a support member 10, adjustable arm 12, housing for the arm 14 and lockable housing 16 for the support member 10.

The support member 10 comprises a flat generally rectangular tray 20 upon which a laptop or notebook portable computer etc., may rest. Tray 20 provides a rectangular aperture within which is located electrical interface or docking means 22 and also detachable side walls 24 adapted to secure the portable computer. Normally side walls 24 will be adapted to engage the external case of a specific laptop or notebook PC. The interface means 22 allow a power supply, signal input and/or output cables to be connected between the portable computer and the vehicle. The underside of the tray 20 houses a high security combination lock 18 or the like, optionally with a master key system facility and an anti drill spinner guard. The lock 18 includes a four point latch mechanism comprising four latch bolts 28 located near each corner of the tray that engage four latch bolt holes 30 located within housing 16. A front face 26 with curved sides is attached to the underside of tray 20 and the lock 18 and interface means 22 are enclosed between this cover and the underside of the tray 20.

Adjustable arm 12 comprises a main arm 40 and a U-shaped bracket 48 located a short distance from a first end of the main arm 40. Bracket 48 is connected by pivots 46 to a the first end of a secondary arm 50. The second end of the secondary arm 50 is connected by pivots 44 to a further U-shaped bracket 42 attached to a rear wall 34 of the housing for the arm 14. Proximal the first end of arm 40 are a pair of rollers 54 mounted on ball bearings that engage a pair of parallel tracks 52 one mounted on the inside of each side wall 36 of the housing for the arm 14. Tracks 52 extend approximately halfway up side walls 36

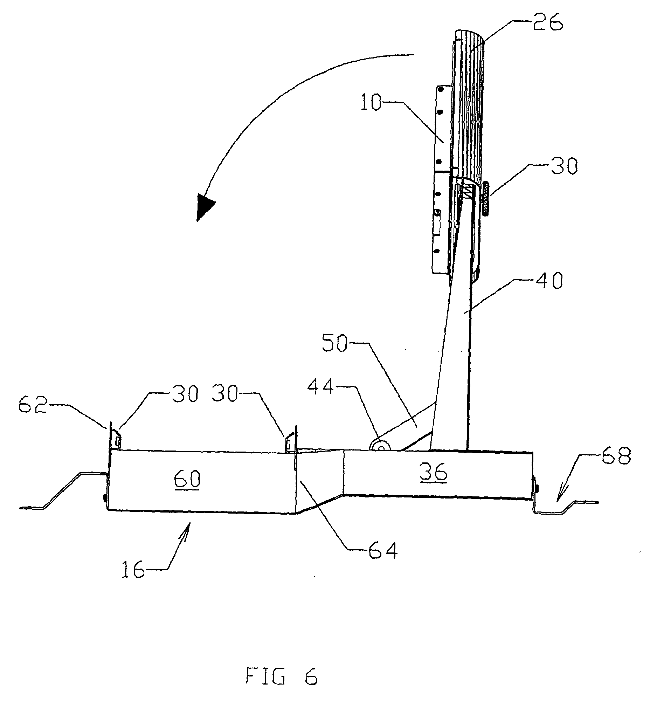

Figure 6 shows how arm 40 may be folded upwardly into the housing for the arm 14. During this motion rollers 54, and hence the first end of arm 40, descend along tracks 52 and secondary arm 50 pivots about pivots 44 and 46 as arm 40 folds inwardly. This combination of movement results in the first end of main arm 40 moving downwardly as it pivots towards housing 14. Thus, on withdrawal of the arm 40, the action is reversed and support member 10 is withdrawn from the housings 14 and 16, and the first end of the arm 40 moves upwardly as it extends outwardly. This allows the arm to be approximately horizontal when the system is open and at the same time allows both the arm 40 and support member 10 to be a short distance above the gear lever and/or hand-brake of the vehicle. This makes it difficult to drive the vehicle when the system is connected to a land vehicle, is open and in use. Biasing means (not shown) may be located between a roller 54 or arm 40 in order to counterbalance the effect of the bending moment exerted by the mass of the support member 10, portable computer and adjustable arm 12 about the roller 54 pivot. This bending moment will tend to move the first end of arm 40 and rollers 54 in an upward direction. Hence the biasing means may be located between rollers 54 or arm 40 and the housing for the arm 14 to exert a downward force on the first end of the arm 40. A spring, in particular a helical spring may provide the desired bias. Alternatively the biasing means may comprise an elastic member, a gas strut or similar hydraulic means, or an electromagnetic means such as a electric motor or an electromagnet.

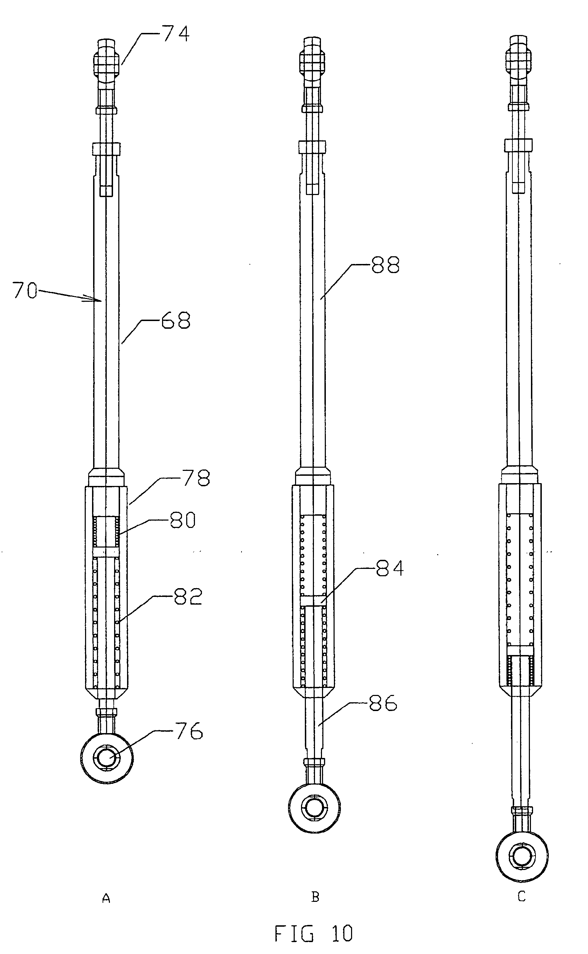

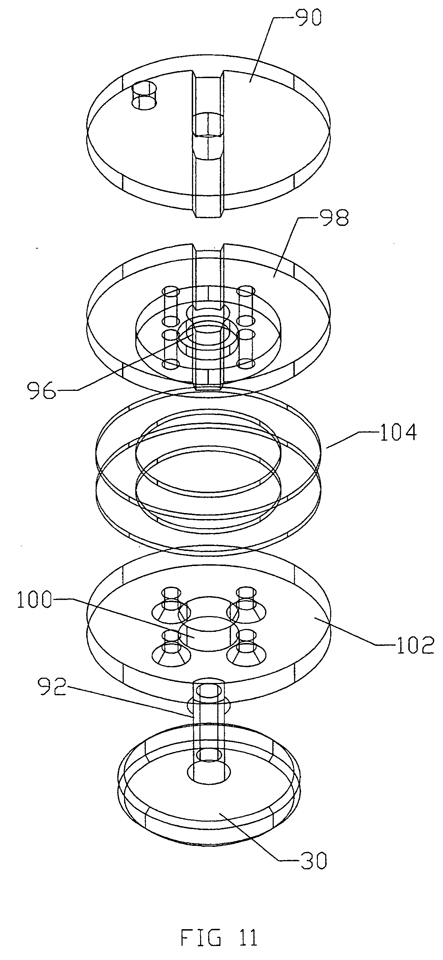

The system includes means that automatically tilt the support means 10 through an angle of typically 40° towards either the driver of the vehicle or a passenger sat beside the driver as the adjustable arm 12 is withdrawn to its open position. Figures 6, 7, 9 and 12 show the support member 10 tilted towards the driver. This tilt mechanism comprises a spring loaded bias arm 70 (see Figure 10) and pivotable member 72 (see Figure 11).

The spring bias arm 70 is elongate and comprises a main rod 68, cylindrical element 78 piston 84 and piston rod 86 and springs 80 and 82. In addition it has bearings 74,76 at each end to allow it to be pivotably attached at a first end to secondary arms 50 and at the other to pivotable member 72. Cylindrical element 78 is attached to main rod 88 and houses the first spring 80 and a second spring 82. Springs 80 and 82 act upon opposite sides of the piston 84 which is also located within the cylindrical element 78. Member 84 is connected by rod 86 to second end bearing 76. As shown in Figure 10, the spring bias arm has two extreme positions (compression and tension) and a normal position. In the normal position both springs 80 and 82 exert equal and opposite forces on piston member 84. In the compression position first spring 80 is near or fully compressed and second spring 82 in near or fully uncompressed. In the tension position the states of the springs 80 and 82 are reversed. The spring bias arm 70 is pivotably attached at one end to the pivotable member 72 (see below) and is pivotably attached at the other end to secondary arm 50 via a U-shaped bracket (not shown).

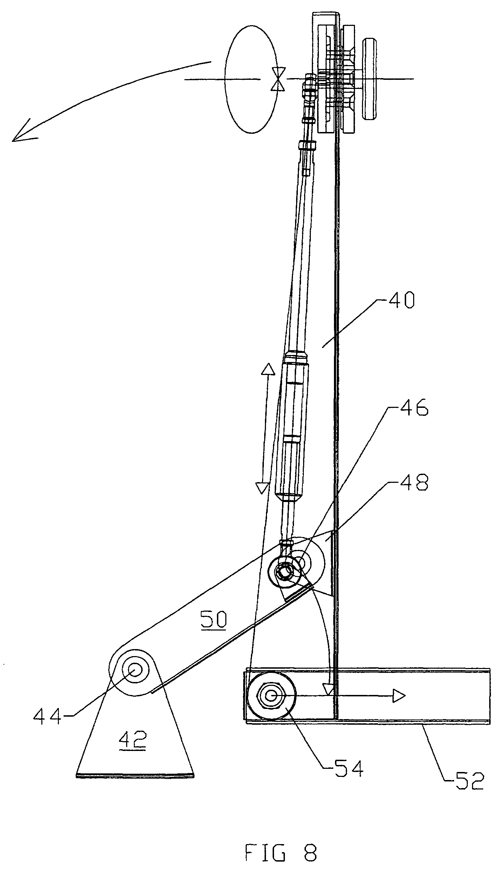

Pivotable member 72 comprises a first plate 90 that is pivotably attached to bearing 74 of bias arm 70. The first plate is also attached to tray 20 of support member 10. The first plate 90 is pivotably mounted on castellated shaft 92 of a knob 30 by means of a castellated central aperture 94. Shaft 92 also passes through circular aperture 96 in a second plate 98 and a circular aperture 100 in a third plate 102. A pair of annular "Glacier Du" washers 104 are located between the second plate 98 and the third plate 102. The floor 38 of main arm 40 is sandwiched between the annular washers 104 and the second and third plates 98 and 102. Four bolts 106 secure plates 98 and 102 either side of floor 38, each bolt passing through a bore 108 in the third plate 102 and engaging a thread 110 in the second plate. Thus, in use support member 10 may pivot relative to arm 12, the pivotal movement being about shaft 92. Knob 30 is spring loaded and has means to limit rotation thereof to an angle of approximately 180°. Thus in use, when arm 40 is opened to the position as shown in Figure 8, spring bias arm 70 is momentarily in its "normal" position (see Figure 10B). However, first spring 84 then exerts a force on rod 86 that extends bias arm 70 to its "tension" position (see Figure 10C). This extension of the bias arm 70 results in the first plate 90 rotating by approximately 40° either towards or away from the driver according to the setting of Knob 30. Thus, on opening the system the support member is automatically aligned either towards the driver or a passenger according to the pre-set position of knob 30.

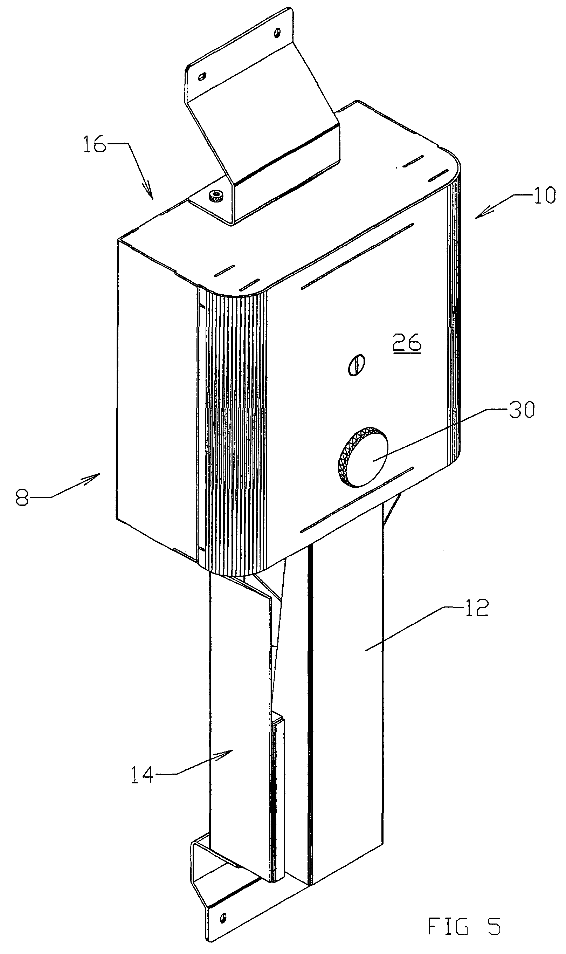

When the support member 10 and adjustable arm 12 are folded within housings 14 and 16 (see Figure 5) the main arm 70 is pushed into the compression position (see Figure 10A).

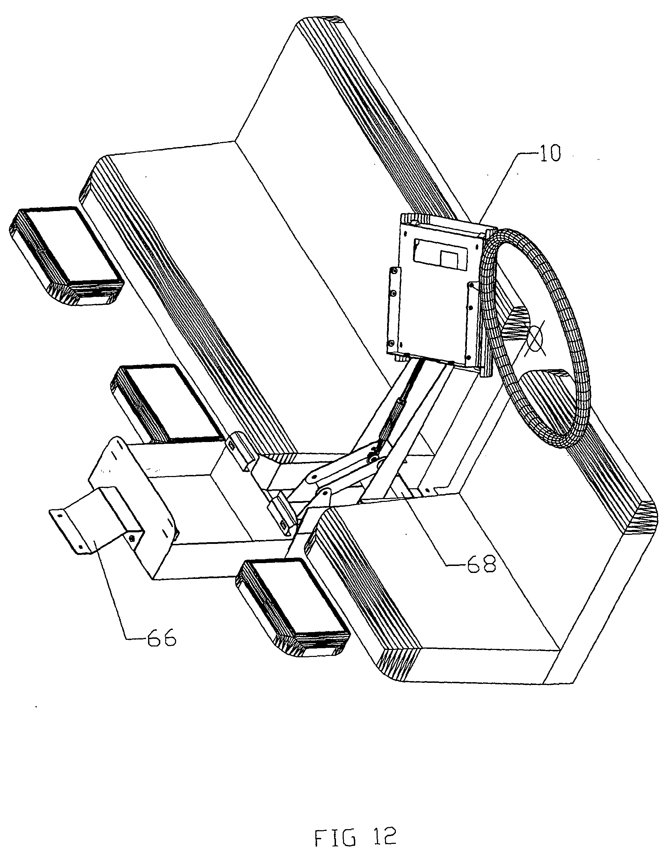

Figure 12 shows a system according to the invention connected to the body of a vehicle by securing members 66 and 68. Figure 12 shows that in its open position the support member 10 presents ergonomic means of supporting a laptop PC (not shown) for use by a person occupying the driver's seat of the vehicle. When retracted the support member and a computer mounted thereon are stowed securely in an unobtrusive manner.

In another aspect supporting member 10 may be connected to adjustable arm 12 by a universal joint rather than pivotable member 70, thereby allowing adjustment of tray 20 such that, for example, it may be inclined at varying angles to the plane of the floor of the vehicle. In addition, such adjustment means may be combined with automatic tilting as described above.

The upward movement of the end of the arm 40 proximal to the housing 14 during opening of the system is preferred; nevertheless a simple hinge or the like may be used when prevention of operating the vehicle when the system is open and in use is not a prime issue.

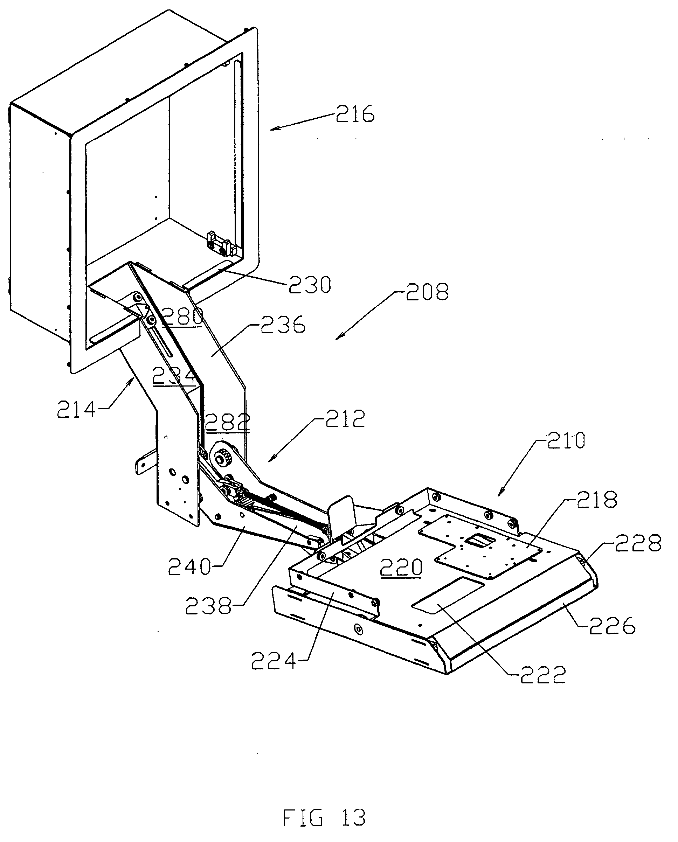

A second embodiment of the invention 208 illustrated in Figures 13 to 21 comprises a support member 210, adjustable arm 212, housing for the arm 214 and lockable housing 216 for the support member 210.

The support member 210 comprises a flat generally rectangular tray 220 upon which a laptop or notebook portable computer etc., may rest; either directly or in a docking means attached to tray 220 (see below). Tray 220 provides an aperture within which is located electrical interface 222 adapted to accept a laptop PC directly or docking means attached thereto. ; Tray 220 may also have detachable side walls 224 adapted to secure a laptop PC. Normally side walls 224 will be adapted to engage the external case of a specific laptop or notebook PC. The interface means 222 allow a power supply, signal input and/or output cables to be connected between the portable computer and the vehicle. The underside of the tray 220 houses a high security combination lock 218 or the like, optionally with a master key system facility and an anti drill spinner guard. The lock 218 includes a four point latch mechanism comprising four latch bolts 228 located near each corner of the tray that engage four latch bolt holes 230 located within housing 216. A front face 226 is attached to the underside of tray 220 and the lock 218 and interface means 222 are enclosed between this cover 226 and the underside of the tray 220.

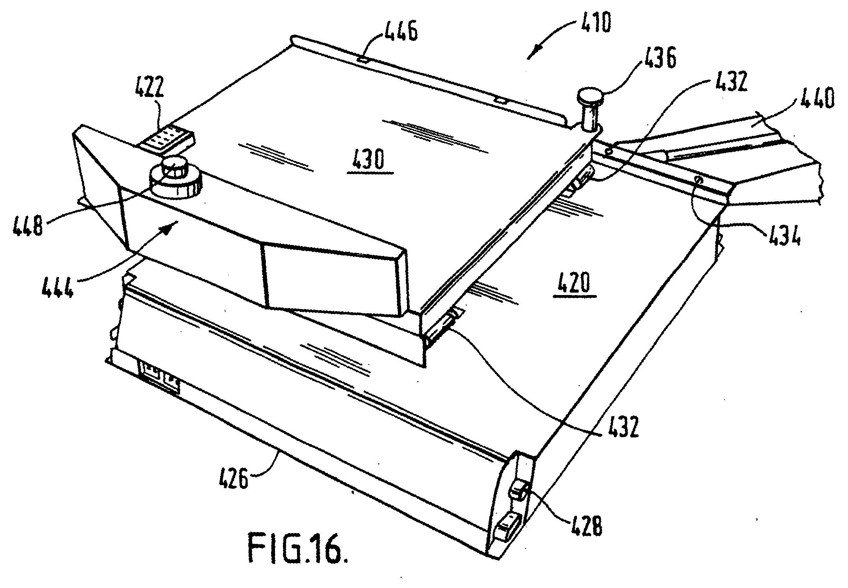

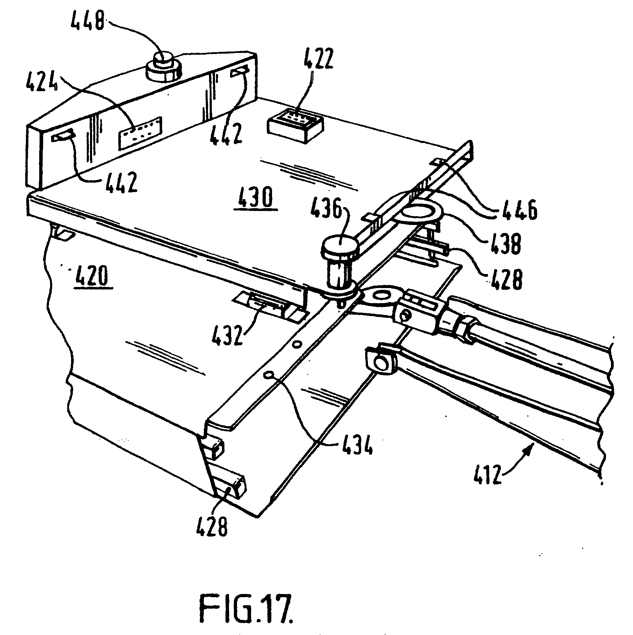

Figures 16 and 17 show docking means 430 mounted on tray 420 which again has a front face 426 and four latch bolts 428. Tray 430 is slidingly mounted on tray 420. For example, the tray may slide on rails with a race and ball bearing system 432. Figure 16 shows a docking station 430 (without a laptop PC) that has been slided sideways relative to the tray 420 and also in a position where the tray 420 is angled with respect to the main arm 440. This advantageously allows a laptop PC mounted on tray 420 to be slid sideways towards a user; thus further enhancing the ergonomic features of the system. The docking station 430 slides along a track that is 100 mm long and may be locked at either end of the track or at intermediate positions by a spring loaded latch 436 that may be moved to engage or disengage apertures 434 provided at suitable intervals along the inner upper edge of the tray 420. Typically, the docking station will slide along a track that is 50 to 150 mm long. The front upper edge of the docking station has an enclosure 444 which may be trapezoid in cross section. Enclosure 444 houses a locking system for engaging a specific laptop PC. Thus, in use, a laptop PC (L) may be placed on top of the docking port 430 so that slots in the rear of the PC engage lugs 446 provided on the rear upper face of the docking station and also such that appropriate electrical connections are made by interface means 422 and 424. A Pull ring mechanism 438 is then pulled in an outward direction and this results in further lugs 442 provided on the inner wall of enclosure 444 also engaging slots in the body of the PC. The engaged lugs 446 and 442 may be locked in this position by depressing a lock button 448 provided on the top face of enclosure 444. A key (not shown) may be inserted in lock button 448 to unlock the mechanism,; thereby allowing pull ring 438 to be pushed inwardly and so release moveable lugs 446 and 442 from their engagement with the PC.

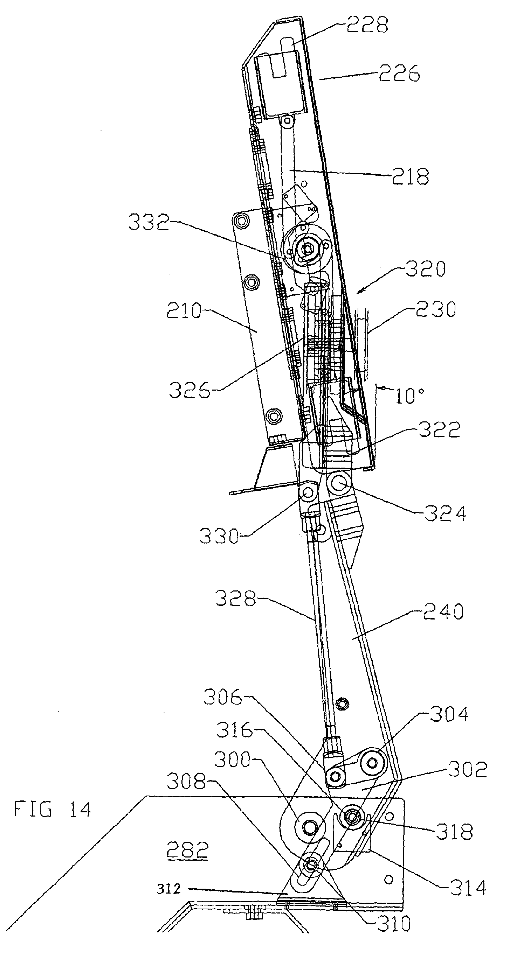

The housing for the arm 214 has a "dog-leg" shape as viewed from a side (see Figures 13 and 14) and comprises an upper portion 280 and a lower portion 282 the transition between the portions forming an angle of approximately 135°.

A first end of the main arm 240 is connected to at a first end lower portion 282 of housing 214 by pivots 300. Figure 14 shows main arm 240 in a fully lowered position and the support member inclined at an angle of approximately 10° to the horizontal. While it is not essential that the support member is inclined; it allows the computer to be presented to the user in an ergonomic manner. Consequently, additional means (not shown) may be provided to allow the angle of inclination of the support member to be adjusted either manually or otherwise; for example my motor means.

The second end of the main arm 240 is connected to an arm portion 322 of a swivel mount 320 by a first pivot 324. Support member 210 is pivotably connected to the swivel mount 320 by a second pivot 326. Thus, when the apparatus is in the position shown in Figure 14, this allows the support member 210 to be rotated about the generally vertical second pivot 326 either manually or by other means (not shown), such as motorised means. In use, the mounting means will typically be turned through an angle of 40° either towards or away from the driver of the vehicle.

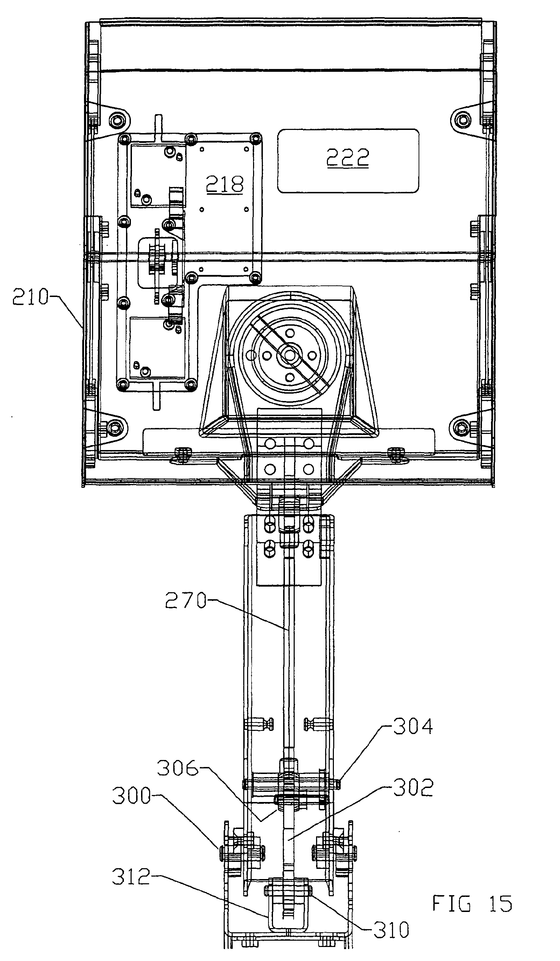

When the adjustable arm 212 and support member 210 are retracted towards the housings 214, 216 it is necessary that the support member 210 pivots relative to the arm about the first pivot 324. This is achieved by a rod 328 connected at one end to a third pivot 330 in swivel mount 320. The other end of rod 328 is pivotably connected 306 to a slotted arm 302. Arm 302 is also connected to main arm 240 by pivots 304 and has an elongate slot 308 that slides about a bolt 310 or the like fixed to the lower portion 282 of housing 214 by a "U-shaped" bracket 312 (see Figure 15). Thus, as the adjustable arm 212 and support member 210 are moved about pivot 300 from the open to retracted position slotted arm 302 moves in such a way as to push rod 328 towards the support member 210 and make it hinge or pivot about 324 such that the arm 212 and support member 210 are no longer in generally linear disposition when viewed from the side (see Figure 14) but have a "dog-leg" configuration approximately corresponding to the housing 214. This allows the front face 226 of tray 220 to be flush with the front face of housing 216 when the apparatus is in a closed position. The " dog-leg" shape also allows housing 216 to be mounted flush with a rear wall in the vehicle cabin while avoiding the need to also recess the majority of the housing. 214.

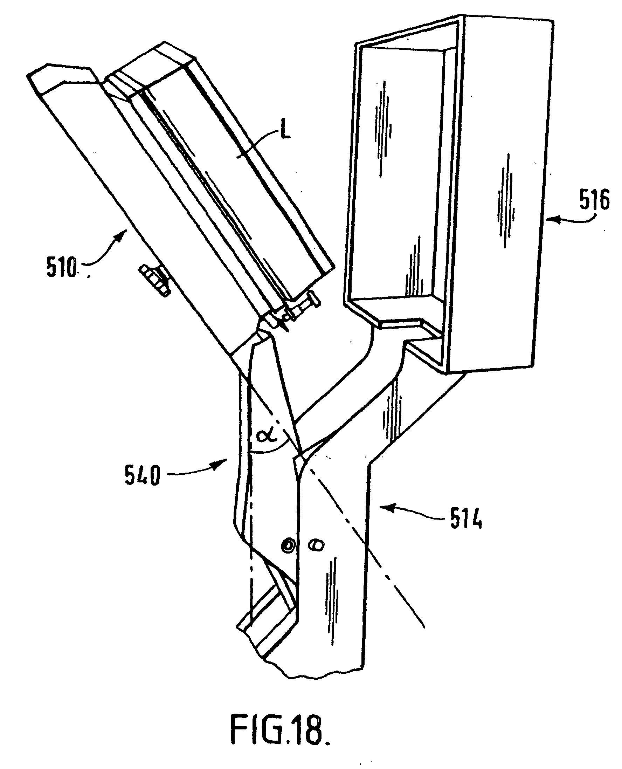

Figure 18 shows a side perspective view of a mounting system according to one aspect of the invention in a partially open position. The angle α ,defined as the acute angle between the plane of the underside of support member 510 and the underside of main arm 540 , varies during opening and closure of the mounting system. When closed α is typically about 40-50 ° and preferably about 45 °. When fully open α is typically about 0 to 20 ° and preferably about 10 °. Typically, the angle α varies between 30° and 60° when the system is closed and between 0 and 30° when the system is fully open.

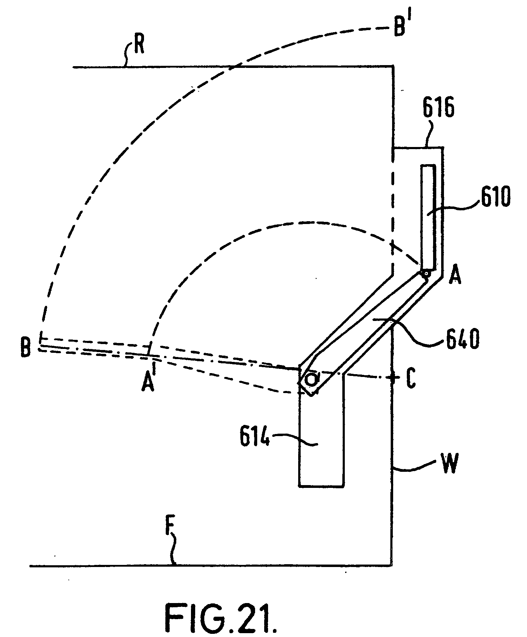

Figure 21 shoes schematically the travel of the main arm 640 and tray 610 during opening/closing relative to the roof R and floor F of a vehicle. Thus, the continuous outline shows the position of the arm 640 and tray 610 when the mounting system is closed, and the broken lines show their position when the system is fully open. The second end of the arm 640 travels through the arc A to A' so that in the open position the tray 640 is positioned in an ideal position for use by a driver or passenger (not shown). It is clear that if a simple single member arm and tray were used (indicated by the line B-C, and pivotally mounted at C) to present a tray in the same position that on closure the upper end of the assembly B' would be above the roof level of the vehicle. Thus, the "dog-leg" arrangement, combined with the mechanism that varies the angle α advantageously allows a mounting system to be used in vehicles with relatively low roofs; such as commercial vans and the like.

As the main arm 240 and support member 210 are moved about pivot 300 from the closed position to the open position (as shown in Figure 14) restraining means are provided to limit opening of the mounting system beyond the position shown in Figure 14. Thus, a threaded pin 316 holds a bush 318 on each outer side wall of the arm and these bushes are positioned so that they abut against a pair of stop blocks 314; each stop block 314 being fixed by rivets or the like to an inner side wall 282 of the lower portion of the housing.

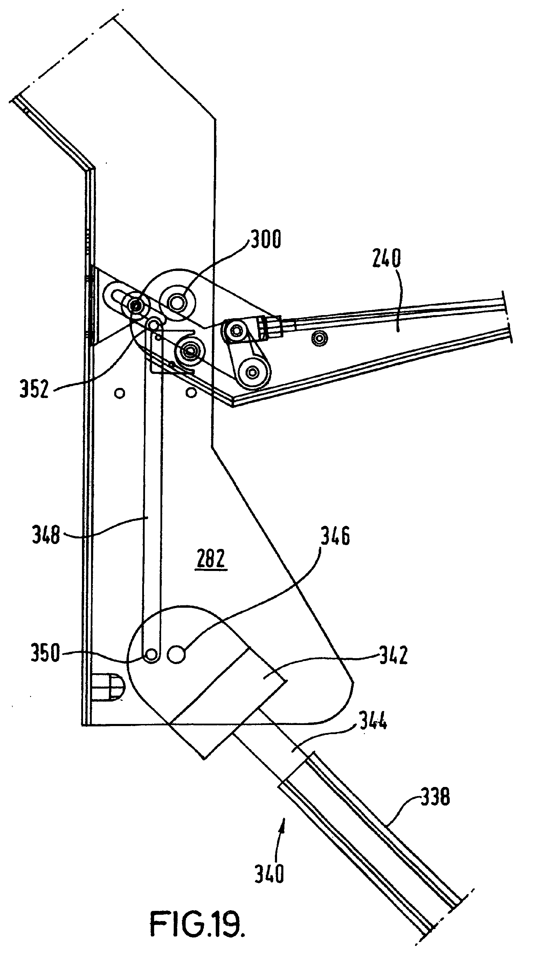

Figure 19 shows optional assisting means that comprises a hand operated lever 340 with a head section 342 pivotally mounted 346 to the lower portion 282 of the "dog-leg" housing and a generally cylindrically shaped 344 handle section with a sleeve 338 that allows the lever to be telescopically extended, in order to allow a user to exert greater leverage. The head section 342 of lever 340 and the first end of main arm 240 are pivotally linked 350,352 by at least one rod or arm 348; the pivot 352 being located at the end of arm 240 such that as the lever is raised by pivoting about 346 the main arm 240 pivots upwardly about pivot 300; thereby assisting stowing of the arm and support member in the housing. Preferably, a pair of parallel rods 348 with associated pivots are employed. In moving from the stowed position to the 'open' position, lever 340 generates approximately 135° of rotation of main arm 240, via a pair of rods or linkages 348. If lever 340 also had to travel through this angle, then it is possible in some vehicles the lever 340 may collide with the floor of the vehicle. To minimise the angle through which lever 340 travels, its pivot point 346 is suitably offset from main pivot point 300 and linkage pivot points 350 and 352, resulting in a reduction of rotation of approximately 25% to generate the correct amount of rotation of main arm 240. This offset feature advantageously allows the lever 340 to be pivotally mounted 346 nearer the floor of the vehicle than would otherwise be possible. The assisting means allows a user to open and close the system without having to endure an element of body twisting and thereby helps to avoid strain injury of the user. The assisting means may include an electric motor for opening and closing the system. Thus, using such motor means the hand operated lever described above may be omitted.

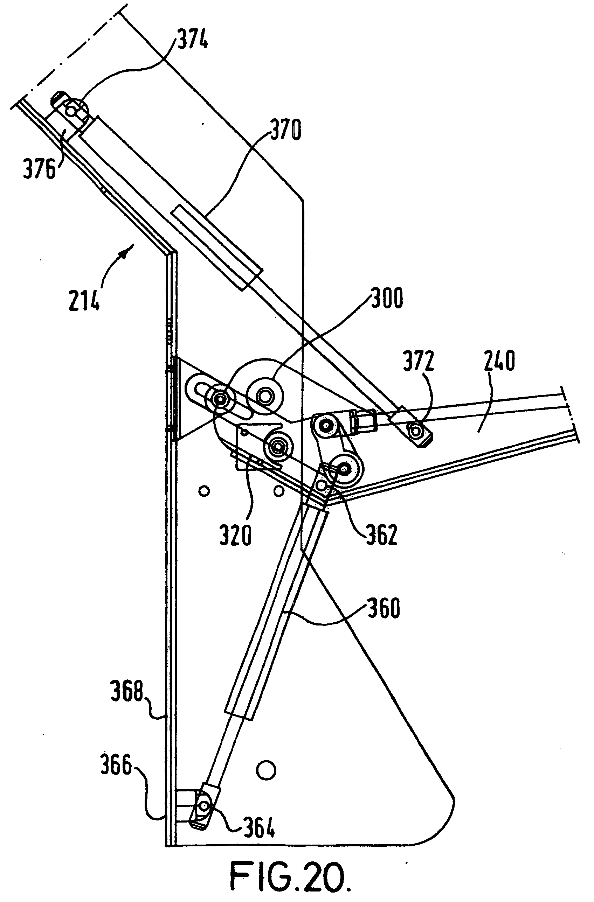

Figure 20 shows optional biasing means. A first biasing means exerts an upward force on the arm 240 and may comprise a gas filled strut 360 that is pivotably connected 362,364 to the first end of main arm 240 and to a post 366 that is mounted so that it may slide along an elongate slot (AA - not shown) that extends typically a distance of about 20 mm in a vertical direction up the rear lower wall 368 of the "dog-leg" housing. Figure 20 shows post 366 at the lower extremity of the elongate slot. Thus, as the arm and support means are stowed gas filled strut 360 exerts an upward force upon the arm, that decreases progressively: thereby largely balancing the weight force of the arm, support means and laptop PC (not shown). This effect continues until the centre of gravity of the arm, support means and laptop is vertically above arm pivot 300 and this corresponds, in the absence of any biasing means, to a point of unstable equilibrium. Closing beyond this point takes place with no biasing force being exerted by the strut 360 as its upper end is free to traverse slot AA during this portion of the closure process.

A second biasing means (see Figure 20) exerts a restraining force during the last portion of the closure process ; that is closing beyond the point of unstable equilibrium. Thus, an oil filled strut 370 is at its lower end pivotally mounted 372 to the first end of the main arm 240 and is at its upper end pivotally mounted 374 to a further post 376 that is again mounted so that it may slide along an elongate slot (BB - not shown) that extends typically a distance of about 100 mm along the inclined rear wall of the "dog-leg" housing 214 ; that is the wall that is inclined at about 45 ° to the vertical. Thus, during closure, the restraining biasing force only starts to operate between the point of stable equilibrium and the point of full closure. The co-operation of post 376 with slot BB ensures that the strut exerts a progressively increasing force as the arm, support means and laptop PC are stowed during the last stage of closure of the system. This ensures that the laptop PC is not unduly jolted during the final stages of closure, and thus helps prevent damage to components that are sensitive to impact forces; such as hard discs within the PC.

The tray locking system may take various forms and need not be a four point latch. Thus, one or more latches may be employed and the locking mechanism may, for example, be a simple key operated mechanical device or a simple electrical lock operated from a vehicle control panel. However, high security locks such as a mechanical combination lock or an electromechanical lock operated by an infra-red key-fob device, or similar, are greatly preferred as such locks afford significant protection against theft of the portable computer. The locking system preferably includes an additional high security key operated lock that can be used to open the apparatus in the event of the main locking system failing in the closed position. This additional lock may, for example, turn shaft 332 (see Figure 14) of the locking mechanism.

The system of the present invention has ergonomic advantages over the prior art. It is particularly suitable for use by service engineers and the like travelling in vans. In such circumstances the user ideally needs to access and stow the portable computer many times during a working day, for example corresponding to individual visits to customers. This raises the possibility of repeated strain injury (RSI). The system of the present invention reduces the likelihood of such injury by presenting the portable computer up to the user in an ergonomic fashion, minimising any effort to lift or position the tray 20 and supported computer on opening for use. While the above embodiment describes a system that after release of the lock is opened manually an electric motor may be used to extend the support means towards the user. The tray 20 may have detachable or adjustable side-walls in order to readily allow secure support of various sized computers. The ergonomic and security aspects of the system of the invention make it suitable for use outside of vehicles, for example in internet cafes.

In this specification the "body of the vehicle" is intended to relate to a fixed item within a vehicle such as a floor or side panel and not to moveable items such as a steering wheel. Further, the expression "connectable to the body of a vehicle" does not merely include direct connection but is also intended to refer to arrangements where the connection is indirect, via an intermediate member, provided that the intermediate member does not normally move relative to the body of the vehicle when the vehicle is moving.

## Claims

1. A mounting system for a portable computer comprising a support member, adapted to hold a portable computer, and an adjustable arm attached to the support member, wherein the arm is connectable to the body of a vehicle.

2. A mounting system according to Claim 1 wherein the arm is pivotably connected, at a point proximal a first end of the arm, to a housing and the second end of the arm is pivotably connected to the support member

3. A mounting system according to any preceding claim wherein at least one of the arm and the support member may be stowed within a housing.

4. A mounting system according to Claims 2 to 3 wherein a biasing means is applied between the arm or pivotable connection and the housing in order to counterbalance the mass of the support member and portable computer.

5. A mounting system according to Claim 4 wherein the biasing means comprises a spring, a gas strut or similar hydraulic means, or an electromagnetic means.

6. A mounting system according to Claim 4 or 5 wherein the biasing means exerts a downward force on the arm or pivotable connection.

7. A mounting system according to any of Claims 3 to 6 wherein as the arm is moved from a closed or storage position to an open or in-use position wherein the supporting member is automatically tilted, rotated, or tilted and rotated in a pre-determined direction and/or extent towards a user.

8. A mounting system according to any of Claims 2 to 7 wherein as the arm and support member are retracted from the housing a mechanism automatically adjusts an angle a defined as the acute angle formed between the plane of the outer face of the support member and the longitudinal axis of the arm.

9. A mounting system according to any preceding claim wherein a docking station is mounted for sliding movement upon the support member.

10. A mounting system according to Claim 9 wherein the docking station slides in a directions generally orthogonal to the longitudinal axis of the arm.

11. A mounting system according to Claim 3 wherein during the final stages of closure further biasing means partially restrains closure, in order to reduce any impact between the support member and housing on closure.

12. A mounting system according to Claim 11 wherein the further biasing means comprises a fluid filled strut.

13. A mounting system according to any preceding claim wherein means are provided to assist a user to open and close the system while in a normal seated position within the vehicle; and thus help avoid strain injury.

14. A mounting system according to claim 13 wherein the assisting means comprises a hand operated lever mechanically connected to an arm raising and lowering mechanism.

15. A mounting system according to Claim 14 wherein the hand operated lever has a slidably extending portion, to allow a user greater leverage when fully extended.

16. A mounting system according to any of Claims 3 to 15 wherein the housing has a "dog-leg" configuration.

17. A mounting system according to any of Claims 3 to 16 wherein during movement of the support member away from the housing the pivotable connection moves in a upward direction relative to a housing for the arm and/or support member.

18. A mounting system according to any of Claims 3 to 17 wherein the pivotable connection may move along a guide track attached to the housing.

19. A mounting system according to Claim 18 wherein a wheel or roller engages the guide track to assist movement of the pivotal connection there along.

20. A mounting system according to any of Claims 3 to 19 wherein the housing is lockable.

21. A mounting system for a portable computer comprising a support member that may be positioned to a users preference and that can be moved from a closed position to an open position, wherein in the closed position the support member is securely stowed in a fixed enclosure.

22. A mounting system for a portable computer according to Claim 21 wherein the support member is automatically rotated or tilted.

23. A mounting system for a portable computer comprising a support member, adapted to hold a portable computer, an adjustable arm attached to the support member, and a housing for the arm and/or support member wherein during movement of the support member away from the housing the support member moves relative to the arm.

24. A mounting system according to Claim 23 wherein the support member moves about a pivot connecting the support member either directly or indirectly to the arm.
